(19) Europäisches Patentamt

European Patent Office

Office européen des brevets

(11) **EP 1 081 706 A2**

(12) **EUROPEAN PATENT APPLICATION**

(43) Date of publication:
**07.03.2001 Bulletin 2001/10**

(51) Int. Cl.$^7$: **G11B 27/30**, G11B 20/14, G11B 11/105

(21) Application number: **00118889.5**

(22) Date of filing: **31.08.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **03.09.1999 JP 25017099**
**17.09.1999 JP 26350499**

(71) Applicant:
**SANYO ELECTRIC Co., Ltd.**
**Moriguchi-shi, Osaka (JP)**

(72) Inventors:
• **Okamoto, Miyuki,**
**Sanyo Electric Co., Ltd.**
**Moriguchi-shi, Osaka (JP)**

• **Fuma, Masato,**
**Sanyo Electric Co., Ltd.**
**Moriguchi-shi, Osaka (JP)**
• **Watanabe, Hiroshi,**
**Sanyo Electric Co., Ltd.**
**Moriguchi-shi, Osaka (JP)**
• **Hori Yoshihiro,**
**Sanyo Electric Co., Ltd.**
**Moriguchi-shi, Osaka (JP)**
• **Kuma, Toshitaka,**
**Sanyo Electric Co., Ltd.**
**Moriguchi-shi, Osaka (JP)**

(74) Representative:
**Glawe, Delfs, Moll & Partner**
**Patentanwälte**
**Postfach 26 01 62**
**80058 München (DE)**

(54) **Data recording device capable of reducing direct-current component and method thereof**

(57)     In a data recording device (200) a format circuit (118) formats data to be recorded in a user data area and a pattern generation circuit (119) generates a data pattern to be recorded in a preformatted area that is provided to reduce a direct-current (DC) component. A selector circuit (120) selects the data pattern via a terminal (121) at a timing of recording data in the preformatted area and selects the formatted data via a terminal (122) at a timing of recording data in the user data area. Then the selector circuit (120) outputs selected data to a magnetic head drive circuit (123). Thus, when data is reproduced from the user data area it can be reproduced free of a significant effect of the DC component and hence reliably.

FIG. 9

## Description

BACKGROUND OF THE INVENTION

Field of the Invention

The present invention relates to data recording devices capable of reducing a direct current (DC) component of a reproduced signal and methods thereof.

Description of the Background Art

Magneto optical disks, phase-change disks and other similar disks are digital disks used to record digital data and they have their recording and reproducing portions all communicating data through alternate-current coupling. As such, if data is recorded on such a digital disk with high density, it is extremely difficult to efficiently record and reproduce a signal component in a low frequency range.

To overcome this, the technique is widely used of employing the EFM modulation, the RLL modulation and any other similar modulation system to modulate digital data to reduce a DC component and a low-frequency component and recording the digital data on a digital disk.

Furthermore, to multiplex on digital data the information to achieve a phase locked loop (PLL) in a clock provided to record and reproduce data on a digital disk, address information and other information, the digital disk can be provided with a groove having a wall wobbled periodically as predetermined. According to the recently standardized, Advanced Storaged Magneto Optical Disk (AS-MO) standard, a wobble is employed to record address information on a wall of a groove.

Furthermore, according to the AS-MO standard, a digital disk has a fine clock mark formed periodically and referred to to generate a clock used for recording or reproducing data. More specifically, this fine clock mark is formed by providing periodically as predetermined a land having a length of approximately three to four data channel bits. In this example, to prevent the fine clock mark from affecting reproduced data, digital data is not recorded in the six data channel bits immediately preceding the fine clock mark and the six data channel bits immediately following the fine clock mark, i.e., the area of 12 data channel bits with the fine clock mark centered. Hereinafter this area will be referred to as a fine clock mark area.

In recording data on a digital disk according to the AS-MO standard, the data is recorded in the form of a magnetic signal in an area other than an address area with address information recorded therein and an area with a fine clock mark provided therein, i.e., a user data area.

In a conventional data recording device, however, when data is reproduced from an area other than a user data area and a defective area incapable of recording data due to damage to a disk, the reproduced signal contains a DC component and a low-frequency component, which are multiplexed on a signal reproduced from the user data area and thus prevent accurate reproduction of a train of data recorded in the user data area.

SUMMARY OF THE INVENTION

Therefore the present invention contemplates a data recording device capable of reliably reproducing data recorded in a user data area and a method thereof.

The present invention provides a data recording device recording data on a disk recording medium having a user data area and a preformatted area alternately arranged, including a pattern generation circuit generating a data pattern for reducing a direct-current component, and a recording circuit employing a same system as applied to the user data area, to record in the preformatted area the data pattern generated by the pattern generation circuit.

The present data recording device can use the same system as applied to the user data area, to record in the preformatted area a data pattern for reducing a DC component. As such, when a signal is reproduced from the disk recording medium, data can be reproduced from the user data area and the preformatted area successively while the DC component does not appear. Thus in the present invention when data is reproduced from the user data area it can be reproduced free of a DC-component superimposed thereon and hence accurately.

Preferably the disk recording medium has the preformatted area including an address area having address information recorded therein by means of at least one wobbled wall of a groove formed in a surface of the recording medium, the address information specifying a location on the recording medium.

The disk recording medium is wobbled to record address information thereon when it is manufactured. The data recording device uses the same system as applied to the user data area, to record in an area having address information recorded therein a data pattern for reducing a DC component. Thus in the present invention data with a reduced DC component can be reproduced from the disk recording medium wobbled to record address information.

Preferably the disk recording medium has the preformatted area including a phase information area having phase information previously recorded therein for generating a clock used to record or reproduce data in the user data area.

The disk recording medium has recorded therein, when it is manufactured, phase information for generating a clock used to record or reproduce data. The data recording device employs the same recording system as applied to the user data area, to record in an area having the phase information recorded therein a data pattern for reducing a DC component. Thus in the present invention data with a reduced DC component can be reproduced from the disk recording medium having the phase information previously recorded thereon.

Preferably, the disk recording medium includes a defective area corresponding to a user data area not suitable for recording user data due to damage to the recording medium and the data pattern from the pattern generation circuit is recorded in a defective area sandwiched between two user data areas.

If the data recording medium has a defective area not suitable for recording data, the data recording device employs the same recording method as applied to the user data area, to record in the defective area a data pattern for reducing a DC component. As such in the present invention data with a reduced DC component can be reproduced from the disk recording medium having a defective area attributed for example to damage to the medium.

Furthermore the present invention provides a data recording device recording data on a disk recording medium having a user data area allowing data to be reproduced in a first reproduction system and a preformatted area allowing data to be reproduced in a second reproduction system different than the first reproduction system, including a pattern generation circuit generating a data pattern for reducing a direct-current component, and a recording circuit recording in the preformatted area the data pattern from the pattern generation circuit as data reproduced in the first reproduction system.

The present data recording device records in the preformatted area the data pattern generated by the data pattern generation circuit as data reproduced by the same system as applied to the user data area. The data pattern recorded in the preformatted area is reproduced in the same system as applied to the user data area. As such, if data is reproduced from a user data area formed subsequent to a preformatted area it can be reproduced with a DC component reduced.

Furthermore the present invention provides a data recording device recording data on a disk recording medium having a user data area allowing data to be reproduced in a first reproduction system and a preformatted area allowing data to be reproduced in a second reproduction system different than the first reproduction system, including a pattern generation circuit generating a data pattern for reducing a direct-current component, a format circuit formatting data to be recorded in the user data area, a selector circuit selecting an output from the pattern generation circuit at a timing of recording data in the preformatted area and selecting an output from the format at a timing of recording data in the user data area, and a magnetic head drive circuit responding to an output from the selector circuit by driving a magnetic head.

In the present data recording device the pattern generation circuit generates a data pattern for reducing a DC component and the format circuit formats data to be recorded in the user data area. The selector circuit selects the data pattern from the pattern generation circuit when data is recorded in the preformatted area and the selector circuit selects the data from the format circuit when data is recorded in the user data area. The magnetic head drive circuit drives the magnetic head to produce a magnetic field modulated by the data selected by the selector circuit. Thus a magneto optical signal is recorded in the preformatted area and the user data area. Thus in the present invention when a magneto optical signal is reproduced from the user data area it can be reproduced with the DC component reduced.

Furthermore the present invention provides a data recording device recording data on a disk recording medium having a user data area allowing data to be reproduced in a first reproduction system and a preformatted area allowing data to be reproduced in a second reproduction system different than the first reproduction system, including a pattern generation circuit generating a data pattern for reducing a direct-current component, a format circuit formatting data to be recorded in the user data area, a timing provision circuit generating a timing signal including a first timing signal generated to record data in the preformatted area and a second timing signal generated to record data in the user data area, a selector circuit responding to the first timing signal by selecting an output from the pattern generation circuit, and responding to the second timing signal by selecting an output from the format circuit, and a magnetic head drive circuit synchronized with the timing signal and responding to an output from the selector circuit to drive a magnetic head.

In the present data recording device the pattern generation circuit generates a data pattern for reducing a DC component, the format circuit formats data to be recorded in the user data area, and the timing provision circuit generates the first timing signal indicating the timing of recording data in the preformatted area and the second timing signal indicating the timing of recording data in the user data area. The selector circuit selects the data pattern from the pattern generation circuit in response to the first timing signal and the data from the format circuit in response to the second timing signal. The magnetic head drive circuit drives the magnetic head in synchronization with the first and second timing signals to produce a magnetic field modulated by the data selected by the selector circuit. Thus a magneto optical signal is recorded in the preformatted area and the user data area. Thus in the present invention, a data pattern reducing a DC component can be accurately recorded in the preformatted area and user data can be accurately recorded in the user data area.

Preferably in the present data recording device the pattern generation circuit generates the data pattern having a logic level alternately varying for each predetermined data bit.

The present data recording device can record on the disk recording medium in the preformatted area a data pattern having a logic level alternately varying whenever a fixed period elapses. As such in the present invention a simple configuration can be used to generate a data pattern capable of reducing a DC component.

Furthermore the present invention provides a data recording method of recording data in a disk recording medium having a user data area allowing data to be reproduced in a first reproduction system and a preformatted area allowing data to be reproduced in a second reproduction system different than the first reproduction system, including a first step of generating data pattern for reducing a direct-current component, a second step of formatting data to be recorded in the user data area, and a third step of recording in the preformatted area the data pattern as data reproduced in the first reproduction system and recording in the user data area the formatted data as data reproduced in the first reproduction system.

The present data recording method generates a data pattern reducing a DC component, and formatted user data. The data pattern is recorded in the preformatted area and the user data is recorded in the user data area. As such in the present invention when data is reproduced from the user data area it can be reproduced with the DC component reduced.

Furthermore the present invention provides a data recording method of recording data in a disk recording medium having a user data area allowing data to be reproduced in a first reproduction system and a preformatted area allowing data to be reproduced in a second reproduction system different than the first reproduction system, including a first step of detecting the preformatted area on the disk recording medium and generating a signal indicating that the preformatted area has been detected, a second step of responding to the signal indicating that the preformatted area has been detected, by generating a timing signal including a first timing signal used in recording data in the preformatted area and a second timing signal used in recording data in the user data area, a third step of generating data pattern for reducing a direct-current component, a fourth step of formatting data to be recorded in the user data area, and a fifth step of responding to the first timing signal by selecting the data pattern generated and responding to the second timing signal by selecting the formatted data, and recording the data pattern in the preformatted area and recording the formatted data in the user data area.

The present data recording method generates a data pattern reducing a DC component, and formatted user data. The data pattern is recorded in the preformatted area in response to the first timing signal and the user data in the user data area in response to the second timing signal. As such in the present invention when data is reproduced from the user data area it can be reproduced with the DC component reduced.

The foregoing and other objects, features, aspects and advantages of the present invention will become more apparent from the following detailed description of the present invention when taken in conjunction with the accompanying drawings.

BRIEF DESCRIPTION OF THE DRAWINGS

In the drawings:

Fig. 1 is a plan view showing a magneto optical recording medium and a format thereof;
Fig. 2 schematically represents a format of a train of data to be recorded;
Fig. 3 is a block diagram showing a data recording device of the present invention;
Fig. 4 illustrates reproduction of data from a preformatted area and a user data area;
Fig. 5 is a block diagram of a PLL circuit;
Fig. 6 illustrates a fine clock mark detection signal and generation of a clock;
Fig. 7 illustrates detection of address information and generation of signal detecting a final location of an address;
Fig. 8 illustrates generation of a timing signal;
Fig. 9 illustrates a train of data to be recorded on a magneto optical recording medium by means of a data recording device of the present invention;
Fig. 10 is a schematic block diagram of the timing provision circuit, pattern generation circuit, format circuit and selector circuit of the Fig. 3 data recording device;
Fig. 11 is timing plots of signals for illustrating an operation of a 532 accumulation counter and that of a 39 accumulation counter in the Fig. 10 timing provision circuit;
Fig. 12 is plots of timing signals generated by the Fig. 10 timing provision circuit;
Fig. 13 is another schematic block diagram of a data recording device in accordance with the present invention;
Fig. 14 is a schematic block diagram of the timing provision circuit, pattern generation circuit, format circuit and selector circuit of the Fig. 13 data recording device;
Fig. 15 is a flow chart of a data recording method in accordance with the present invention;
Fig. 16 represents address information and a reproduced RF signal when an address area does not have a data pattern recorded therein; and
Fig. 17 represents address information and a reproduced RF signal when an address area has a data pattern recorded therein.

DESCRIPTION OF THE PREFERRED EMBODIMENTS

The embodiments of the present invention will now be described in detail with reference to the drawings. In the figures like portions will be labeled like reference characters and a description thereof will not be repeated.

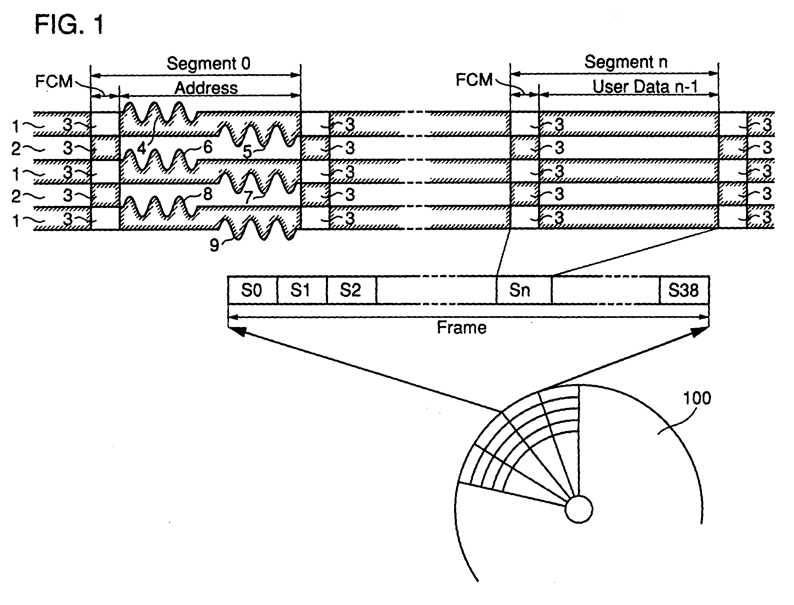

With reference to Fig. 1 a description will now be made of a magneto optical recording medium on which the present data recording device records data. A magneto optical recording medium 100 has frames as a recording unit, equally spaced, each configured of 39 segments S0, S1, S2, ..., S38.

Magneto optical recording medium 100 has a planar structure with a groove 1 and a land 2 radially, alternately formed and arranged spirally or concentrically. Each segment has a length of 532 data channel bits (DCBs) and at the top of each segment is formed a fine clock mark (FCM) 3 indicating the information of a phase of a clock used to record and reproduce data. Fine clock mark 3 is formed by providing grooves 1 with lands having a fixed length and spaced by a fixed distance, and providing lands 2 with grooves having a fixed length and spaced by a fixed distance. At the top of a frame, i.e., segment S0, following fine clock marks 3 address information (Address) indicating an address on magneto optical recording medium 100 is preformatted by means of wobbles 4 to 9 when the medium is produced. Wobbles 4 and 5 are formed on opposite walls of groove 1 and record identical address information, and so are and do wobbles 6 and 7 and wobbles 8 and 9. Such system of recording address information is referred to as a one-sided staggering system, which allows address information to be accurately detected if magneto optical recording medium 100 has a tilt or the like and a laser beam is offset from a center of groove 1 or land 2.

An area with address information and that with fine clock mark 3 are not used as a user data recording area. Also note that a segment Sn is configured of fine clock mark 3 and user data User Data n-1.

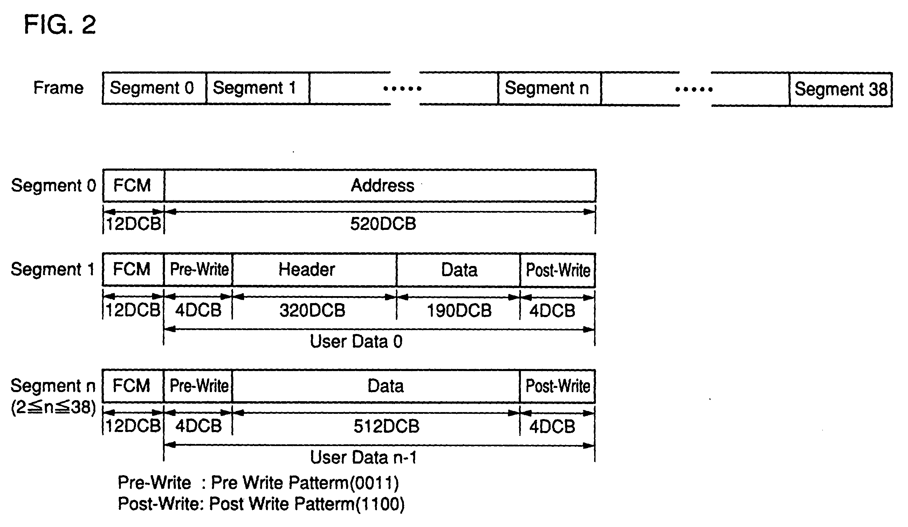

Reference will now be made to Fig. 2 to describe the configuration of the segment more specifically. Of segments S0, S1, S2 ..., S38 configuring a frame, segment S0 is an address segment preformatted on magneto optical recording medium 100 and segments S1 through S38 are data segments to be used as a user data recording area. Segment S0 is configured of a 12-DCB fine lock mark area FCM and a 520-DCB address Address, and segment S1 is configured of a 12-DCB fine clock mark area FCM, a 4-DCB Pre-Write, a 512-DCB Data and a 4-DCB Post-Write.

Pre-Write indicates the start of a data write and is configured for example of a predetermined pattern "0011", and Post-Write indicates the end of data and is configured for example of a predetermined pattern "1100".

Furthermore, in the segment S1 user data area there is provided a Header corresponding to a fixed pattern used for example to confirm the location of data when it is reproduced, compensate for the position of a reproducing clock, and adjust laser power. The fixed pattern recorded in the head is a pattern with a DC component reduced (hereinafter referred to as a DC-free pattern), e.g., a predetermined number of 2T domains spaced by 2T and a predetermined number of 8T domains spaced by 8T.

A 2T domain is reproduced to obtain an analog signal, which is sampled at a timing adjusted to match a phase of a clock used for recording and reproducing data, so as to provide phase compensation, and a 2T domain and an 8T domain are reproduced and the laser power is adjusted to achieve an at least 50% ratio of the intensity of a signal reproduced from the 2T domain to that of a signal reproduced from the 8T domain. Furthermore, an 8T domain is reproduced and the reproduced signal is binarized in the form of a digital signal which is in turn checked as to whether its position matches a previously expected position of a digital signal of the 8T domain, so as to check the location of data in reproducing the same. Furthermore, Pre-Write, Post-Write and Header have their respective patterns recorded successively as user data when user data is recorded.

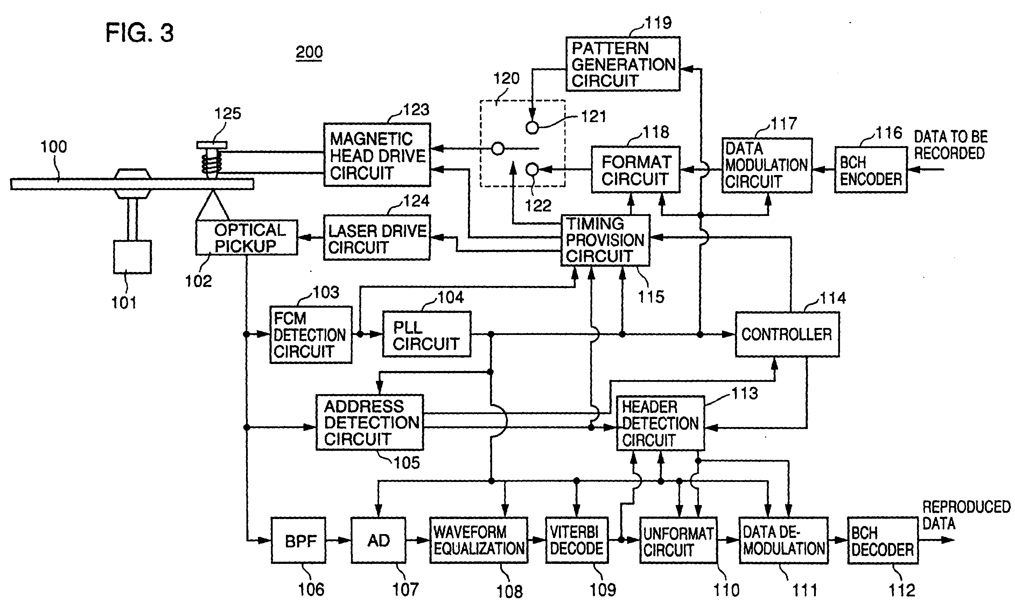

Reference will now be made to Fig. 3 to describe a data recording device of the present invention. In the present invention, a data recording device 200 includes a spindle motor 101, an optical pickup 102, a fine clock mark detection circuit (FCM detection circuit) 103, a PLL circuit 104, an address detection circuit 105, a BPF 106, an A-D converter 107, a waveform equalizer circuit 108, a Viterbi decode circuit 109, an unformat circuit 110, a data demodulation circuit 111, a BCH decoder 112, a header detection circuit 113, a controller 114, a timing provision circuit 115, a BCH encoder 116, a data modulation circuit 117, a format circuit 118, a pattern generation circuit 119, a selector 120, a magnetic head drive circuit 123, a laser drive circuit 124, and a magnetic head 125.

Spindle motor 101 allows magneto optical recording medium 100 to rotate at a predetermined rotation rate. Optical pickup 102 directs a laser beam to recording medium 100 and detects the light reflected therefrom. FCM detection circuit 103 detects a fine clock mark detection signal FCMT with which optical pickup 102 indicates the location of fine lock mark 3 on recording medium 100, and FCM detection circuit 103 outputs the detected signal FCMT to PLL circuit 104 and timing provision circuit 115.

In response to fine clock mark detection signal FCMT output from FCM detection circuit 103, PLL circuit 104 generates and outputs a clock CK to address detection circuit 105, A-D converter 107, waveform equalizer circuit 108, Viterbi decode circuit 109, unformat circuit 110, data demodulation circuit 111, controller 114, timing provision circuit 115, data modulation circuit 117, format circuit 118 and pattern generation circuit 119.

Furthermore, address detection circuit 105 receives an address signal ADA that optical pickup 102 has detected from the magneto optical recording medium 100 segment S0 through tangential push-pull and in synchronization with clock CK from PLL circuit 104 address detection circuit 105 detects address information AD and also produces at a final location of the address signal an address detection signal ADF indicating that the address information has been detected. The detected address information AD is output to controller 114 and the generated address detection signal ADF is output to header detection circuit 113 and timing provision circuit 15.

BPF 106 removes high and low ranges of a reproduced signal RF reproduced from magneto optical recording medium 100. A-D converter 107 converts reproduced signal RF from an analog signal to a digital signal in synchronization with clock CK from PLL circuit 104.

Waveform equalizer circuit 108 applies a PR (1, 1) waveform equalization to the digitally converted, reproduced signal RF in synchronization with clock CK from PLL circuit 104. More specifically, reproduced signal RF is equalized to allow the data preceding a detection signal and that following the detection signal to achieve one-to-one wave interference.

Viterbi decode circuit 109 synchronously with clock CK from PLL circuit 104 converts reproduced signal RF from multi-valued level to binary-valued level and outputs the converted reproduced signal RF to unformat circuit 110 and header detection circuit 113.

Unformat circuit 110 removes from header detection circuit 113 the Pre-Write, Post-Write and Header recorded on magneto optical recording medium 100 in a user data area.

Data demodulation circuit 111 synchronously with clock CK from PLL circuit 104 receives unformatted, reproduced signal RF and demodulates the same to remove the digital demodulation provided to the signal when it is recorded.

BCH decoder 112 corrects an error of the reproduced signal demodulated and outputs the corrected signal as reproduced data. Header detection circuit 113 refers to address information from controller 114 and address detection signal ADF from address detection circuit 105 to detect the location of a header contained in the reproduced signal and in synchronization with clock CK from PLL circuit 104 generates from the reproduced signal a timing signal for Pre-Write and that for Header and then outputs the timing signal for Header to unformat circuit 110 and data demodulation circuit 111.

Controller 114 receives address information AD detected by address detection circuit 105 and based on the information controls a servo mechanism (not shown) to allow optical pickup 102 to access a desired location. Furthermore, controller 114 synchronously with clock CK from PLL circuit 104 outputs address information AD to header detection circuit 113 and also controls timing provision circuit 115.

Controlled by controlled 114, timing provision circuit 115, in response to fine clock mark detection signal FCMT from FCM detection circuit 103 and final address location detection signal ADF from address detection circuit 105, synchronously with clock CK from PLL circuit 104 provides a timing SS and outputs the same to format circuit 118, selector circuit 120, magnetic head drive circuit 123 and laser drive circuit 124.

BCH encoder 116 adds an error correction code to data to be recorded. Data modulation circuit 117 modulates in a predetermined system the data to be recorded. Format circuit 118, synchronously with clock CK from PLL circuit 104 and in response to timing signal SS from timing provision circuit 115, adds Pre-Write, Header and Post-Write to the data to be recorded, formats the data to be recorded to allow it to match a user data area and outputs the formatted data to selector circuit 120.

Pattern generation circuit 119 synchronously with clock CK from PLL circuit 104 generates a data pattern to reduce a DC component and outputs the generated data pattern to selector circuit 120.

Selector circuit 120 in response to timing signal SS from timing provision circuit 115 selects the data to be recorded from format circuit 118 via a terminal 122 and selects the data pattern from pattern generation circuit 119 via a terminal 121 and outputs the same to magnetic head drive circuit 123.

Magnetic head drive circuit 123 drives magnetic head 125 in synchronization with each timing of timing signal SS from timing provision circuit 115 and in response to an output from selector circuit 120.

Laser drive circuit 124 in response to timing signal SS from timing provision circuit 115 drives a semiconductor laser (not shown) provided in optical pickup 102.

Driven by magnetic head drive circuit 123, magnetic head 125 applies to magneto optical recording medium 100 a magnetic field modulated by the data to be recorded or the data pattern.

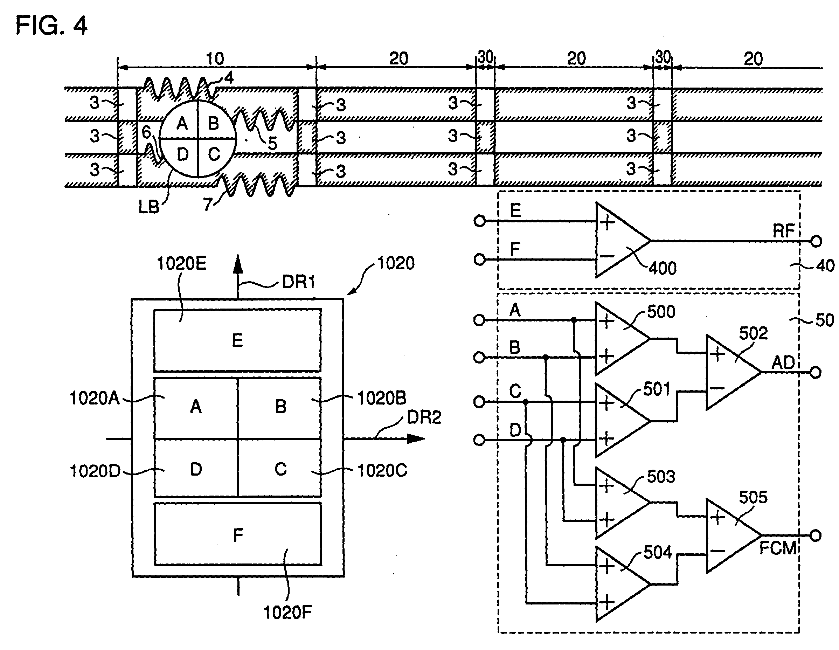

Reference will now be made to Fig. 4 to describe how address information, a fine clock mark and a magneto optical signal are detected on magneto optical recording medium 100. Areas 10 and 30 configure a preformatted area preformatted when recording medium 100 is produced. Area 10 is provided with wobbles 4 to 7 and fine clock mark 3. Area 30 is provided with fine clock mark 3. An area 20 corresponds to a user data area used to record user data.

Optical pickup 102, directing a laser beam to magneto optical recording medium 100 and detecting the light reflected therefrom, has therein a photodetector 1020 having six detection areas 1020A, 1020B, 1020C, 1020D, 1020E, 1020F. Areas A1020A and B1020B and areas C1020C and D1020D are arranged in the recording medium 100 track direction DR2, and areas A1020A and D1020D, areas B1020B and C1020C, and areas E1020E and F1020F are arranged in the medium's tracking direction DR1.

Areas A1020A, B1020B, C1020C and D1020D detect a laser beam LB directed to magneto optical recording medium 100 that is reflected at the beam's areas A, B, C and D, respectively. Areas E1020E and F1020F detect a laser beam reflected at the entirety of the laser beam LB areas A, B, C and D and diffracted by the optical pickup 102 Wollaston prism (not shown) in two directions having different polarization planes.

A magneto optical signal recorded in a user data area or area 20 is reproduced in reproduced signal RF, which is detected by calculating the difference between a laser beam intensity [F] detected in area E1020E of photodetector 1020 and a laser beam intensity [F] detected in area F1020F of photodetector 1020. More specifically, a differentiator 400 calculates the difference between laser beam intensity [E] detected in area E1020E and laser beam intensity [F] detected in area F1020F to output reproduced signal $RF = [E] - [F]$.

Address information recorded by wobbles 4 to 7 in area 10 configuring a preformatted area, is reproduced in a signal, which is detected through radial push-pull in the form of the sum of a laser beam intensity [A] detected in area A1020A and a laser beam intensity [B] detected in area B1020B minus the sum of laser beam intensity [C] detected in area C1020C and laser beam intensity [D] detected in area D 1020D. More specifically, address information is detected in a circuit 50 at adders 500 and 501 and a subtracter 502. Adder 500 outputs laser beam intensity [A] detected in area A1020A plus laser beam intensity [B] detected in area B1020B, i.e., [A + B]. Adder 501 outputs laser beam intensity [C] detected in area C1020C and laser beam intensity [D] detected in area D1020D, i. e., [C +D]. Subtracter 502 calculates the adder 500 output [A + B] minus the adder 501 output [C + D] to output a signal reproducing address information $AD = [A + B]-[C+D]$.

The area 30 fine clock mark FCM is detected through tangential push-pull in the form of the sum of laser beam intensities [A] and [D] respectively detected in areas A1020A and D1020D minus that of laser beam intensities [B] and [C] respectively detected in areas B1020B and C1020C. More specifically, fine clock mark FCM is detected in circuit 50 at adders 503 and 504 and a subtracter 505. Adder 503 outputs the summation of laser beam intensities [A] and [D] respectively detected in areas A1020A and D1020D, i.e., [A + D]. Adder 504 outputs the summation of laser beam intensities [B] and [C] respectively detected in areas B1020B and C1020C, i.e., [B + C]. Subtracter 505 calculates the adder 503 output [A + D] minus the adder 504 output [B + C] to output a signal reproducing the fine clock mark FCM [A + D] - [B + C].

As has been described with reference to Fig. 4, data recorded in a user data area or area 20 is reproduced in a system different than areas 10 and 30 configuring a preformatted area are reproduced. As such, in reproducing data from area 20, areas 10 and 30 correspond to those without data recorded therein and the data recorded in area 20 is thus reproduced intermittently. Consequently, if data is reproduced from area 20 following area 10 the data is reproduced from area 20 following an area having no data reproduced. As such, the reproduced signal has a DC component superimposed thereon and the data is hardly reproduced accurately. This also applies when data is reproduced from area 20 following area 30.

In the present invention, data can be recorded in areas 10 and 30 in the same system as data is recorded in area 20 to allow the data in areas 10 and 30 and that in area 20 to be reproduced in the same system to reduce a DC component superimposed on a reproduced signal when data is reproduced from area 20. Thus the present invention is characterized in that data is recorded in areas 10 and 30 in the same system as data is recorded in area 20.

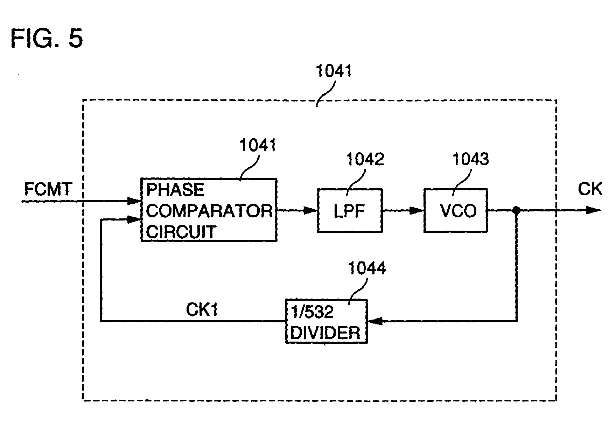

Reference will now be made to Fig. 5 to describe a configuration of PLL circuit 104 configuring the Fig. 3 data recording device. PLL circuit 104 includes a phase comparator circuit 1041, an LPF 1042, a voltage control oscillator (VCO) 1043 and a 1/532 divider 1044. 1/532 divider 1044 divides clock CK from VCO 1043 by 532. Phase comparator 1041 compares a phase of a clock CK1, clock CK divided by 1/532 divider 1044, with that of fine clock mark detection signal FCMT and, referring to the phase difference, generates an error voltage. Thus, PLL circuit 104 generates clock CK synchronized with fine clock mark detection signal FCMT and having a period corresponding to 1/532 of signal FCMT.

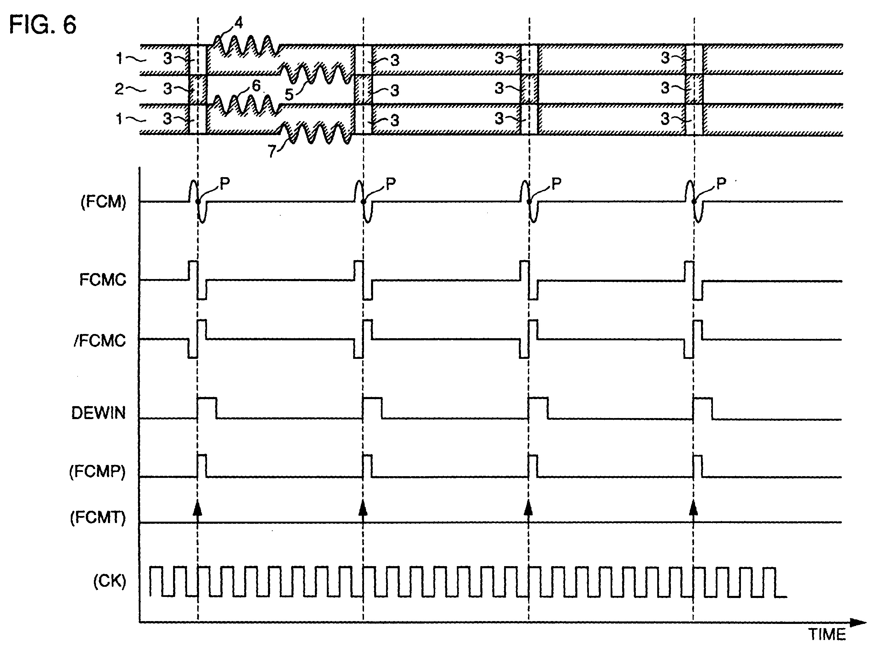

Reference will now be made to Fig. 6 to describe how fine clock mark FCM is detected and clock CK is generated. As has been describe with reference to Fig. 4, the optical pickup 102 photodetection unit 1020 employs tangential push-pull to detect fine clock mark signal FCMS and outputs the detected signal FCMS to FCM detection circuit 103. In response to the received fine clock mark signal FCMS, FCM detection circuit 103 generates fine clock mark detection signal FCMT. More specifically, in FCM detection circuit 103, fine clock mark signal FCMS is compared in a predetermined level and has a signal FCMC converted. Then signal FCMC is inverted to a signal /FCMC. Then there is generated a detection window signal DEWIN having an amplitude witdh of 6 DCBs and having a rising edge synchronized with a point P switching the polarity of fine clock mark signal FCM and the logical product of signal /FCMC and detection window signal DEWIN is calculated to produce signal FCMP. Thus, fine clock mark detection signal FCMT is generated having an amplitude width of 1 DCB and synchronized with a low to high transition of signal FCMP.

Note that the Fig. 6 fine clock mark signal FCM is detected when a laser beam runs on groove 1 of magneto optical recording medium 100. A fine clock mark signal detected when a laser beam runs on land 2 is different only in polarity and has point P unchanged in position. As such, signal FCMP and fine clock mark detection signal FCMT can be similarly generated when a laser beam runs on land 2.

FCM detection circuit 103 outputs detected fine clock mark detection signal FCMT to PLL circuit 104. As has been described with reference to Fig. 5, PLL circuit 104 generates clock CK synchronized with fine clock mark detection signal FCMT and obtained by dividing signal FCMT by 532.

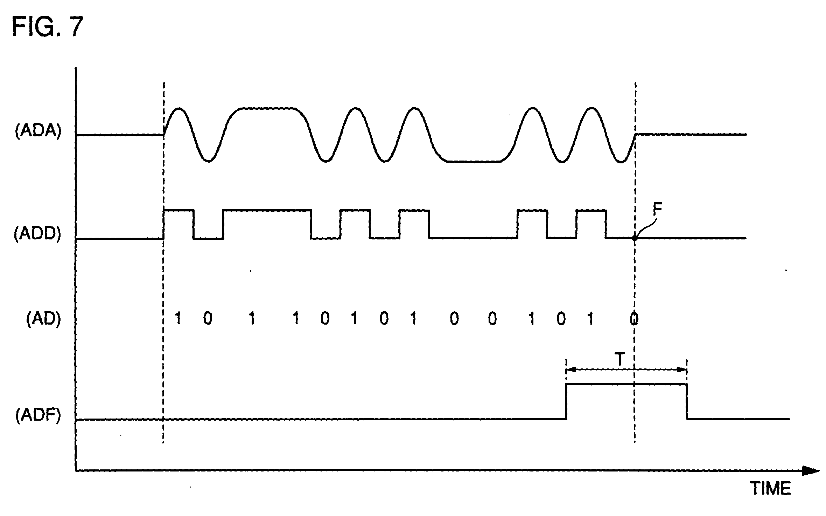

Reference will now be made to Fig. 7 to describe how address detection circuit 105 detects address information and produces an address detection signal. As has been described with reference to Fig. 4, optical pickup 102 employs radial push-pull to detect address signal ADA recorded by a wobble and outputs the signal to address detection circuit 105. Address detection circuit 105 binarizes address signal ADA to produce a binary signal ADD and based on the same detects address information AD. Furthermore, address detection circuit 105, responding to binary signal ADD and referring to address information AD, generates in synchronization with clock CK from PLL circuit 104 an address detection signal ADF indicative of the address signal's final location F. Address detection signal ADF is generated with such a fixed length T as determined to include the address information's final location F. More specifically, there are counted from a component of clock CK synchronous with the initial location of binary signal ADD to that of clock CK synchronous with final location F of the address signal. Then, with final location F having a count value K, address detection signal ADF is generated to generate a pulse component having the fixed length T between a count value K - m and a count value K+m.

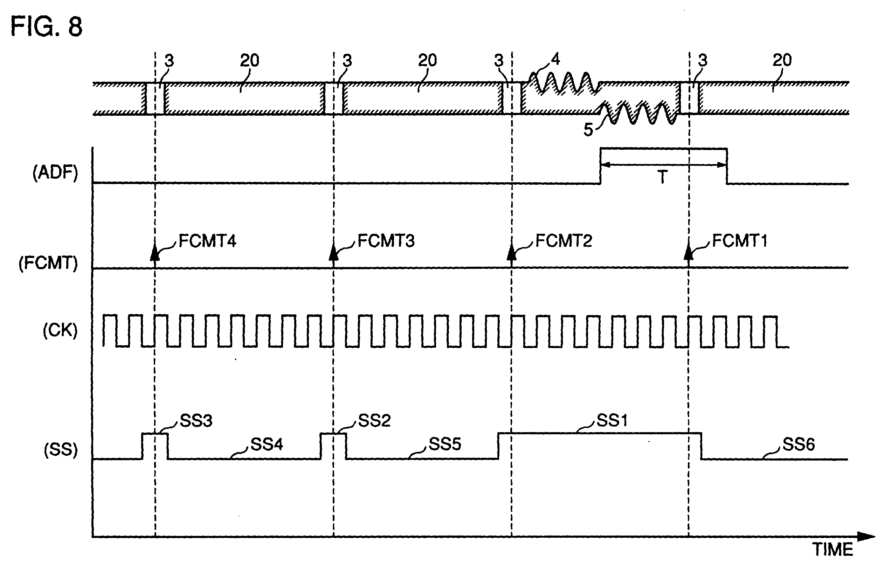

Reference will now be made to Fig. 8 to described how timing provision circuit 115 generates timing signal SS. Receiving address detection signal ADF from address detection circuit 105, fine clock mark detection signal FCMT from FCM detection circuit 103 and clock CK from PLL circuit 104, timing provision circuit 115 determines at which timing of fine clock mark signal FCMT there exists address detection signal ADF and timing provision circuit 115 generates timing signal SS synchronized with clock CK and formed of a component SS1 containing a component FCMT1 of fine clock mark detection signal FCMT accompanied by address detection signal ADF and a component FCMT2 existing before component FCMT1 and components SS2 and SS3 only containing components FCMT3 and FCMT4 of fine clock mark detection signal FCMT. Components FCMT1, FCMT2, FCMT3, FCMT4 is each synchronized with the center of fine clock mark 3 and, with fine clock mark 3 having the predetermined length of 12 DCBs, timing provision circuit 115 produces component SS1 to contain an area provided with wobbles 4 and 5 and the fine clock marks 3 areas existing on opposite sides of the area having wobbles 4 and 5, components SS2 and SS3 to contain the fine clock mark 3 areas corresponding to components FCMT3 and FCMT4 of fine clock mark detection signal FCMT, and components SS4, SS5 and SS6 to correspond to user data recording areas 20.

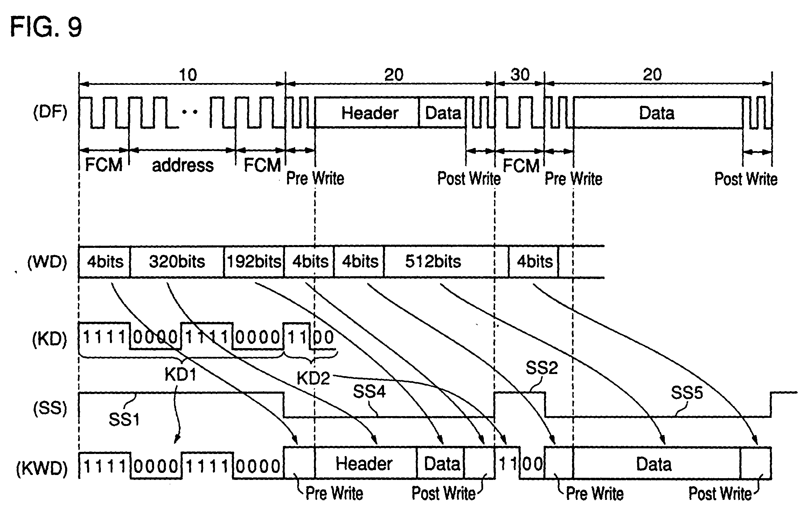

Reference will now be made to Fig. 9 to describe an operation of the Fig. 3 selector circuit 120. In response to timing signal SS from timing provision circuit 115, selector circuit 120 switches between terminals 121 and 122. When timing signal SS is logical high selector circuit 120 switches to terminal 121, and when timing signal SS is logical low selector circuit 120 switches to terminal 122.

When on magneto optical recording medium 100 a data configuration DF is FCM/address/FCM/Pre-Write/Header/Data/Post-Write/FCM/Pre-Write/Data/Post-rite, and format circuit 118 outputs data to be recorded WD and pattern generation circuit 119 outputs a data pattern KD, selector circuit 120 switches to terminal 121 based on component SS1 of timing signal SS, selects a data pattern "1111000011110000" output from pattern generation circuit 119 and outputs the data pattern to magnetic head drive circuit 123. Then, based on component SS4, selector circuit 121 switches to terminal 122 and of the data to be recorded output from format circuit 118 selects 4-bit Pre-Write, 320-bit Header, 192-bit Data and 4-bit Post-Write and outputs them to magnetic head drive circuit 123. Subsequently, based on component SS2, selector circuit 120 switches to terminal 121 to select a data pattern "1100" output from pattern generation circuit 119 and outputs the data pattern to magnetic head drive circuit 123. Subsequently, based on component SS5, selector circuit 120 switches to terminal 122 and of data to be recorded WD output from format circuit 118 selects 4-bit Pre-Write, 512-bit Data and 4-bit Post-Write and outputs them to magnetic head drive circuit 123. Thus, magnetic head drive circuit 123 receives a train of data to be recorded KWD.

As is apparent from Fig. 9, by outputting the train of data to be recorded KWD to magnetic head drive circuit 123, a magneto optical signal "1111000011110000" is recorded on magneto optical recording medium 100 in area 10 provided with FCM/address/FCM and a magneto optical signal "1100" is recorded on the medium in area 30 provided with FCM. Thus, on magneto optical recording medium 100 data configuration DF can have its areas all with a magneto optical signal recorded therein and when data is reproduced from a user data area or area 20 a DC component can be reduced to reproduce a signal accurately.

In a preformatted area configured of areas 10 and 30 any data pattern other than those described above may be recorded that typically has logic levels having a predetermined length and alternating from one level to the other level, such as "10101010 ...", "110011001100...", "111000111000...". Alternatively it may for example be a data pattern with "1" recorded spaced as predetermined, such as "100001000010000...". For this data pattern typically the spacing between "1" and "1" is only required to be set shorter than a maximal signal length in a digital modulation system applied to modulate user data. If fine clock mark area FCM has a length of 12 DCBs the data pattern only requires a "1"-"1" spacing of no more than 11 DCBs. This also applies when a logic level is inverted, and any phase may be a starting phase if the pattern of interest is a periodical pattern.

Magneto optical recording medium 100 can have a defective area which has a defect and is thus incapable of recording user data. In that case, the Fig. 3 controller 114 refers to address information AD detected by address detection circuit 105 and the address information of a defect frame previously recorded in a defect management area (DMA), to specify a defect frame, and then outputs a defect frame detection signal. Controller 114 outputs the defect frame detection signal to timing provision circuit 115, which in turn generates timing signal SS to select a data pattern from pattern generation circuit 119 as data to be recorded in the defect frame and outputs the generated timing signal SS to selector circuit 120. Thus, selector circuit 120 selects data to be recorded in the defect frame from pattern generation circuit 119 via terminal 121 and outputs the same to magnetic head drive circuit 123. As such, if there is a defect frame a magneto optical signal is recorded in the defect frame. Thus, if data is reproduced from a user data area following a defective area the data can be free of a DC component superimposed thereon and it can thus be reproduced accurately.

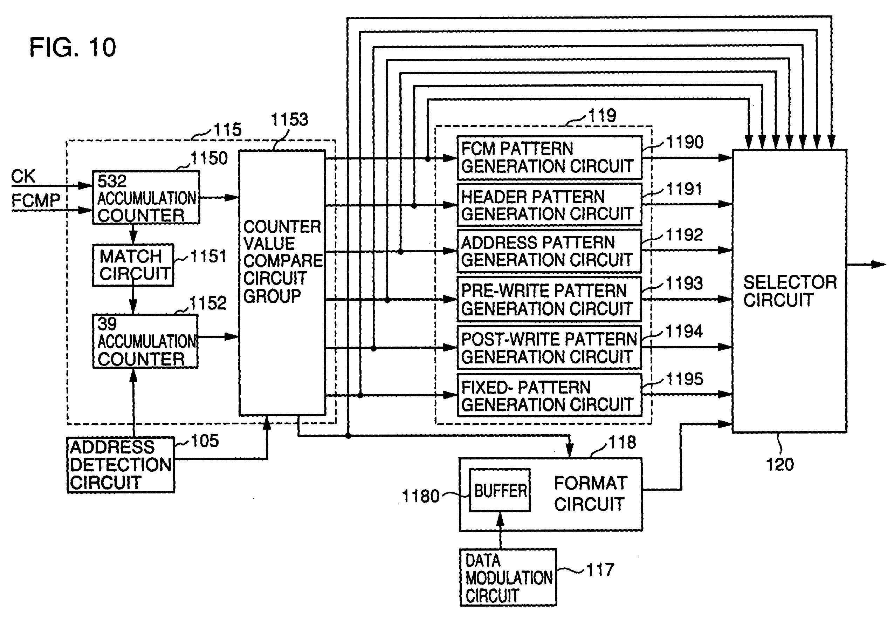

Providing the Fig. 3 data recording device 200 timing provision circuit 115, format circuit 118, pattern generation circuit 119 and selector 120 in the Fig. 10 circuit configuration also allows a signal to be recorded so that the signal can be reproduced with a DC component reduced according to a format of magneto optical recording medium 100.

As shown in Fig. 10, timing provision circuit 115 is configured of a 532 accumulation counter 1150, a match circuit 1151, a 39 accumulation counter 1152, and a counter value compare circuit group 1153. When 532 accumulation counter 1150 receives fine clock mark detection signal FCMT from FCM detection circuit 103, 532 accumulation counter 1150 is reset, and counts clock CK received from PLL circuit 104 and outputs the count value to match circuit 1151 and count value compare circuit group 1153. Match circuit 1151 determines whether the count value from 532 accumulation counter 1150 has a maximal count value matching 531 and if so then match circuit 1151 outputs a match signal MTC to 39 accumulation counter 1152. 39 accumulation counter 1152 is reset by address detection signal ADF received from address detection circuit 105, and 39 accumulation counter 1152 counts match signal MTC and outputs the count value to counter value compare circuit group 1153.

Counter value compare circuit group 1153 refers to the count value from 39 accumulation counter 1152 to specify segments S0 to S38 of magneto optical recording medium 100 and refers to the count value from 532 accumulation counter 1150 to specify in each of segments S0 to S38 the locations of a fine clock mark, Address, Pre-Write, Post-Write, Header, Data and the like. Then, based on the specified fine clock mark's location, counter value compare circuit group 1153 outputs fine clock mark timing signals TSFCM 1 to 3 to the pattern generation circuit 119 FCM pattern generation circuit 1190 and selector circuit 120. Furthermore, based on the specified Header's location, counter value compare circuit group 1153 outputs a header timing signal TSHED to the pattern generation circuit 119 Header pattern generation circuit 1191 and selector circuit 120. Furthermore, based on the specified Address's location, counter value compare circuit group 1153 outputs an address timing signal TSAD to the pattern generation circuit 119 address pattern generation circuit 1192 and selector circuit 120. Furthermore, based on the specified Pre-Write's location, counter value compare circuit group 1153 outputs Pre-Write timing signals TSPRW1 and 2 to the pattern generation circuit 119 Pre-Write pattern generation circuit 1193 and selector circuit 120. Furthermore, based on the specified Post-Write's location, counter value compare circuit group 1153 outputs post write timing signals TSPOW1 and 2 to the pattern generation circuit 119 Post-Write pattern generation circuit 1194 and selector circuit 120. Furthermore, based on the specified data's location, counter value compare circuit group 1153 outputs data timing signals TSDA1 and 2 to format circuit 118 and selector circuit 120. Furthermore, when counter value compare circuit group 1153 receives a defect frame detection signal from address detection circuit 105, counter value compare circuit group 1153 outputs a fixed timing signal TSHLD to the fixed-pattern generation circuit 1195 of the pattern generation circuit 119 and selector circuit 120.

Format circuit 118 includes a buffer 180, which stores modulated data received from data modulation circuit 117 and in response to data timing signals TSDA1 and 2 from counter value compare circuit group 1153 reads data from a buffer and outputs the read data to selector circuit 120.

Pattern generation circuit 119 is configured of FCM pattern generation circuit 1190, Header pattern generation circuit 1191, address pattern generation circuit 1192, Pre-Write pattern generation circuit 1193, Post-Write pattern generation circuit 1194, and fixed-pattern generation circuit 1195. FCM pattern generation circuit 1190 synchronously with fine clock mark timing signals TSFCM1-3 generates pattern data to be recorded in an area provided with a fine clock mark and outputs the pattern data to selector circuit 120. Header pattern generation circuit 1191 synchronously with Header timing signal TSHED generates pattern data to be recorded in a Header area and outputs the pattern data to selector circuit 120.

Address pattern generation circuit 1192 synchronously with address timing signal TSAD generates pattern data to be recorded in an address area and outputs the pattern data to selector circuit 120. Pre-Write pattern generation circuit 1193 synchronously with pre-write timing signals TSPRW1 and 2 generates pattern data to be recorded in a pre-write area and outputs the pattern data to selector circuit 120.

Post-Write pattern generation circuit 1194 synchronously with post write timing signals TSPOW1 and 2 generates pattern data to be recorded in a post-write area and outputs the pattern data to selector 120. Fixed-pattern generation circuit 1195 synchronously with fixed timing signal TSHLD generates pattern data to be recorded in a damaged frame and outputs the pattern data to selector 120.

In synchronization with fine clock mark timing signals TSFCM1-3 received from counter value compare circuit group 1153, selector 120 outputs to magnetic head drive circuit 123 the pattern data received from FCM pattern generation circuit 1190 that is to be recorded in the fine clock mark area. Furthermore, in synchronization with header timing signal TSHED received from counter value compare circuit group 1153, selector 120 outputs to magnetic head drive circuit 123 the pattern data received from Header pattern generation circuit 1191 that is to be recorded in the header area. Furthermore, in synchronization with address timing signal TSAD received from counter value compare circuit group 1153, selector 120 outputs to magnetic head drive circuit 123 the pattern data received from address pattern generation circuit 1192 that is to be recorded in the address area. Furthermore, in synchronization with pre-write timing signals TSPRW1 and 2 received from counter value compare circuit group 1153, selector 120 outputs to magnetic head drive circuit 123 the pattern data received from Pre-Write pattern generation circuit 1193 that is to be recorded in the pre-write area. Furthermore, in synchronization with post write timing signals TSPOW1 and 2 received from counter value compare circuit group 1153, selector 120 outputs to magnetic head drive circuit 123 the pattern data received from Post-Write pattern generation circuit 1194 that is to be recorded in the post-write area. Furthermore, in synchronization with fixed timing signal TSHLD received from counter value compare circuit group 1153, selector 120 outputs to magnetic head drive circuit 123 the pattern data received from fixed-pattern generation circuit 1195 that is to be recorded in the entirety of the damaged frame.

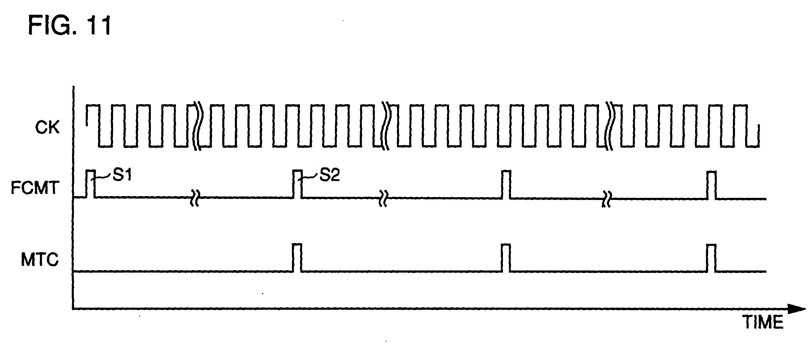

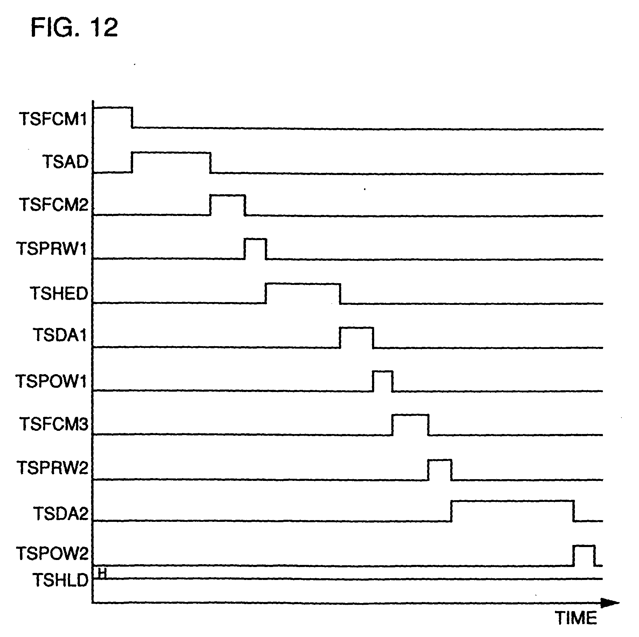

Reference will now be made to Figs. 10-12 to describe an operation of timing provision circuit 115, format circuit 118, pattern generation circuit 119 and selector circuit 120. In timing provision circuit 115, when 532 accumulation counter 1150 receives fine clock mark detection signal FCMT from FCM detection circuit 103 it resets its count value and counts clock CK received from PLL circuit 104. More specifically, when it receives the Fig. 11 fine clock mark detection signal FCMT components S1, S2, ... it resets its count value and counts clock CK between the adjacent components S1 and S2. Since normally there are 532 clock components existing between the adjacent components S1 and S2, 532 accumulation counter 1150 outputs count values 0 to 531 to match circuit 1151 and counter value compare circuit group 1153.

Then, match circuit 1152 determines whether of the received count values the maximal count value is 531 and if so then it outputs match signal MTC to 39 accumulation counter 1152. Then, and in response to address detection signal ADF received from address detection circuit 105, 39 accumulation counter 1152 is reset and it counts match signal MTC and outputs its count values 0 to 38 to count value compare circuit group 1153. Since address detection signal ADF is input for each frame or every 39 segments, 39 accumulation counter 1152 outputs count values of 0 to 531 to count value compare circuit group 1153.

When count value compare circuit group 1153 receives a count value of "0" from 39 accumulation counter 1152, it recognizes that segment S0 or address information AD is a preformatted area. Then, when count value compare circuit group 1153 receives count values of 0-11 and 12-531 from 532 accumulation counter 1150 it recognizes that the counted values correspond to the segment S0 fine clock mark area and address area, respectively. Then, count value compare circuit group 1153 generates fine clock mark timing signal TSFCM1 and address timing signal TSAD and outputs them to FCM pattern generation circuit 1190 and address pattern generation circuit 1192, respectively.

Furthermore, when count value compare circuit group 1153 receives a count value of "1" from 39 accumulation counter 1152, it recognizes segment S1. Then, when count value compare circuit group 1153 receives from 532 accumulation counter 1150 count values of 0-11, 12-15, 16-335, 336-525 and 526-529, it recognizes that those count values correspond to fine clock mark, Pre-Write, Header, Data, Post-Write areas, respectively. Then, count value compare circuit group 1153 generates and outputs fine clock mark timing signal TSFCM2, pre-write timing signal TSPRW1, header timing signal TSHED, data timing signal TSDA1 and post timing signal TSPOW1 to FCM pattern generation circuit 1190, Pre-Write pattern generation circuit 1193, Header pattern generation circuit 1191, format circuit 1198 and Post-Write pattern generation circuit 1194, respectively.

Furthermore, when count value compare circuit group 1153 receives count values of "2" to "38" from 39 accumulation counter 1152, it recognizes segments S2 to S38. Then, when count value compare circuit group 1153 receives from 532 accumulation counter 1150 count values of 0-11, 12-15, 16-527, 528-531 it recognizes that those count values correspond to fine clock mark, Pre-Write, Data and Post-Write areas, respectively. Then, count value compare circuit group 1153 generates and outputs fine clock mark timing signal TSFCM3, pre-write timing signal TSPRW2, data timing signal TSDA2 and post timing signal TSPOW2 to FCM pattern generation circuit 1190, Pre-Write pattern generation circuit 1193, format circuit 118 and Post-Write pattern generation circuit 1194, respectively.

FCM pattern generation circuit 1190 synchronously with each of fine clock mark timing signals TSFCM1-3 generates 12-DCB pattern data "111100001111" and outputs the pattern data to selector circuit 120. Header pattern generation circuit 1191 synchronously with header timing signal TSHED generates 320-DCB pattern data "11001100...1100111111110000000011111111000000000...11111111000000000" and outputs the pattern data to selector circuit 120. As has been described previously, 320-DCB pattern data is used for recording a predetermined number of 2T signals spaced by 2T and a predetermined number of 8T signals spaced by 8T and it is used to determine a laser beam's optimal intensity and the like.

Address pattern generation circuit 1192 synchronously with address timing signal TSAD generates 520-DCB pattern data "1111000011110000...11110000" and outputs the pattern data to selector circuit 120. Pre-Write pattern generation circuit 1193 synchronously with pre-write timing signals TSPRW1 and 2 generates 4-DCB pattern data "0011" and outputs the pattern data to selector circuit 120. Post-Write pattern generation circuit 1194 synchronously with post timing signals TSPOW1 and 2 generates 4-DCB pattern data "1100" and outputs the pattern data to selector circuit 120. Fixed-pattern generation circuit 1195 synchronously with fixed-pattern timing signal TSHLD generates 532 x 39 = 20748-DCB pattern data "1111000011110000...11110000" and outputs the pattern data to selector circuit 120. Format circuit 118 synchronously with data timing signal TSDA1 reads 190-DCB data from buffer 1180 and outputs the data to selector circuit 120 and synchronously with data timing signal TSDA2 reads 512-DCB data from buffer 1180 and outputs the data to selector circuit 120.

Selector circuit 120 synchronously with fine clock mark timing signal TSFCM1 outputs 12-DCB pattern data "111100001111" to magnetic head drive circuit 123 and synchronously with address timing signal TSAD outputs 520-DCB pattern data "1111000011110000...11110000" to magnetic head drive circuit 123.

Furthermore, selector circuit 120 synchronously with fine clock mark timing signal TSFCM2 outputs 12-DCB pattern data "111100001111" to magnetic head drive circuit 123 and synchronously with pre-write timing signal TSPRW outputs 4-DCB pattern data "0011" to magnetic head drive circuit 123.

Furthermore, selector circuit 120 synchronously with header timing signal TSHED outputs 320-DCB pattern data "1100110011001100...1111111100000000011111111" to magnetic head drive circuit 123 and synchronously with data timing signal TSDA1 outputs 190-DCB data to be recorded to magnetic head drive circuit 123.

Furthermore, selector circuit 120 synchronously with post-write timing signal TSPOW outputs 4-DCB pattern data "1100" to magnetic head drive circuit 123 and synchronously with fine clock mark timing signal TSFCM3 outputs 12-DCB pattern data "111100001111" to magnetic head drive circuit 123.

Furthermore, selector circuit 120 synchronously with pre-write timing signal TSPRW outputs 4-DCB pattern data "0011" to magnetic head drive circuit 123 and synchronously with data timing signal TSDA2 outputs 512-DCB data to be recorded to magnetic head drive circuit 123 and synchronously with post-write timing signal TSPOW outputs 4-DCB pattern data "1100" to magnetic head drive circuit 123.

Furthermore, selector circuit 120 synchronously with fixed-pattern timing signal TSHLD outputs 20748-DCB "11110000...11110000" to magnetic head drive circuit 123.

Thus, the Fig. 9 train of data to be recorded KWD is output to magnetic head drive circuit 123 and a signal reducing a DC component of a reproduced signal is recorded in an area other than user data area 20 used to record data to be recorded WD, i.e., pre-formatted areas 10 and 30. Furthermore, a signal reducing a DC component of a reproduced signal is also recorded in a frame having a defect such as a scar or the like.

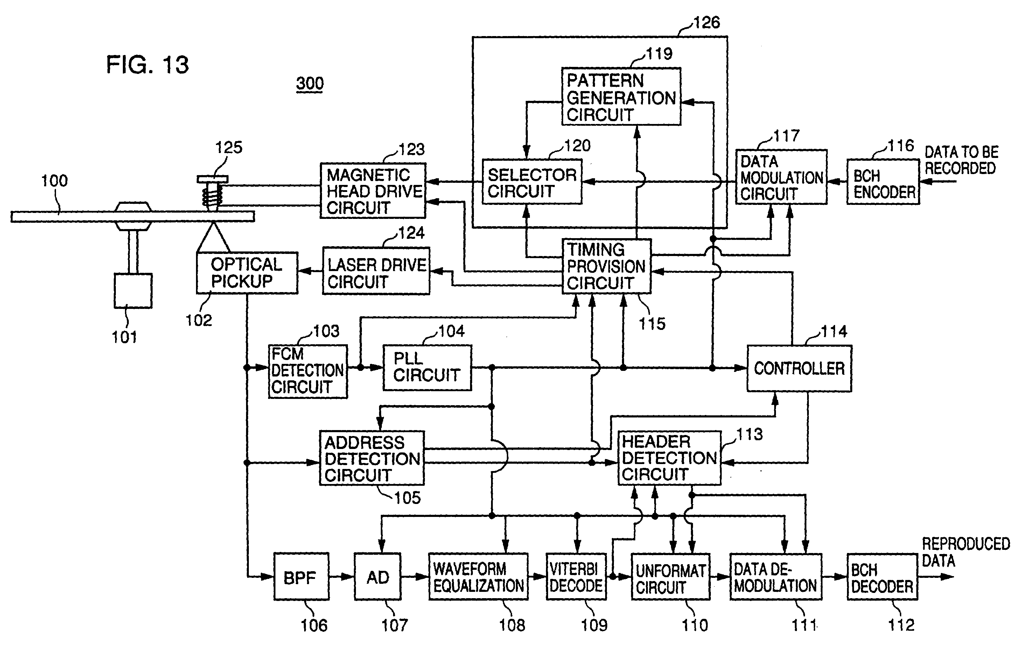

In accordance with the present invention a data recording device may be a data recording device 300 shown in Fig. 13. Data recording device 300 corresponds to the Fig. 3 data recording device 200 minus format circuit 118 and pattern generation circuit 119 and selector circuit 120 together configuring a format circuit 126.

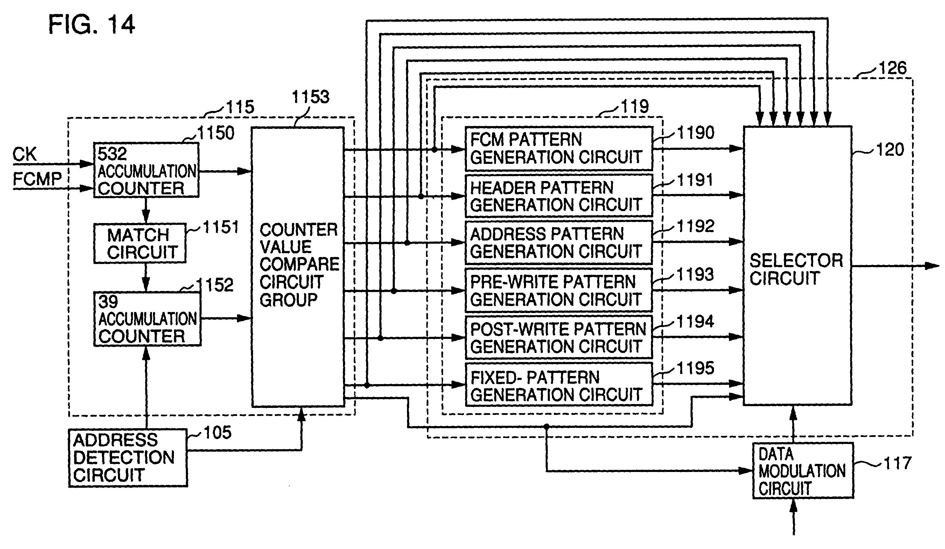

As shown in Fig. 14, timing provision circuit 115 and pattern generation circuit 119 are configured as shown in Fig. 10. Pattern generation circuit 119 also synchronously with each timing signal from timing provision circuit 115 generates each pattern data, as shown in Fig. 10. It only differs from that shown in Fig. 10 that timing provision circuit 115 also outputs data timing signals TSDA1 and TSDA2 to data modulation circuit 117. When data modulation circuit 117 receives data timing signals TSDA1 and TSDA2, data modulation circuit 117 synchronously with data timing signals TSDA1 and TSDA2 reads from the data stored in a buffer (not shown) an amount of data corresponding to that of data designated by data timing signals TSDA1, modulates the read data in a predetermined system and outputs the modulated data to selector circuit 120. More specifically, when it has received data timing signal TSDA1, data modulation circuit 117 reads 190-DCB data from a buffer, modulates the read data in a predetermined system and then outputs the 190-DCB modulated data to selector circuit 120. When it has received data timing signal TSDA2, data modulation circuit 117 reads 512-DCB data from the buffer, modulates the read data in a predetermined system and outputs the 512-DCB modulated data to selector circuit 120.

Selector circuit 120 synchronously with data timing signals TSDA1 and TSDA2 outputs the 190-DCB modulated data and the 512-DCB modulated data, respectively, to magnetic head drive circuit 123. The remaining pattern data are output to magnetic head drive circuit 123 in the operation as described with reference to Fig. 10.

The Fig. 14 circuit configuration is more advantageous than the Fig. 10 circuit configuration in that a buffer used for storing data to be recorded WD can be reduced in capacity. More specifically, in the Fig. 10 circuit configuration, buffer 1180 stores modulated data and when data timing signals TSDA1 and TSDA2 from timing provision circuit 115 are input to format circuit 118 their respective 198-DCB modulated data and 512-DCB modulated data are read from buffer 1180. As such, data to be recorded are successively modulated and thus stored in buffer 1180. In contrast, in the Fig. 14 circuit configuration, a buffer (not shown) stores data before it is modulated, and data modulation circuit 117 reads and modulates a predetermined amount of data from the buffer at one time. As such, the buffer does not store a large amount of data to be recorded.

Thus the Fig. 14 circuit configuration can use a buffer smaller in capacity than the Fig. 10 circuit configuration.

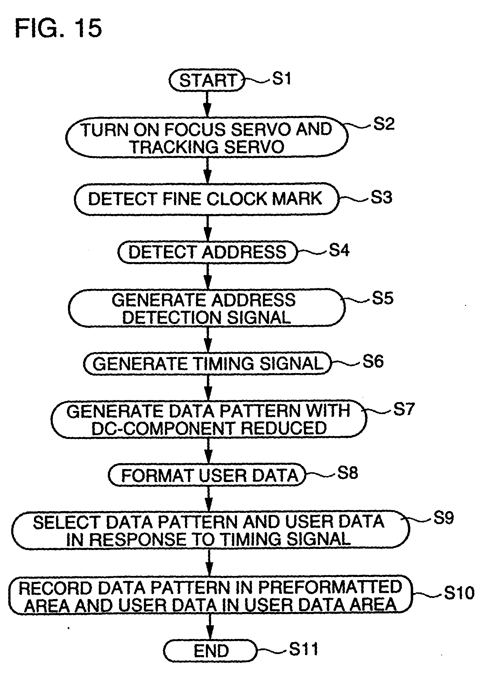

Fig. 15 is a flow chart of a data recording method in accordance with the present invention. When a recording operation is started (S1), a focus servo and a tracking servo are turned on (S2) and optical pickup 102 and FCM detection circuit 103 together detect a fine clock mark on magneto optical recording medium 100 and generate fine clock mark detection signal FCMT (S3). Then, optical pickup 102 and address detection circuit 105 together detect address information AD from magneto optical recording medium 100 (S4) and generate address detection signal ADF (S5). Then, timing provision circuit 115 generates timing signal SS from the fine clock mark detection signal and the address detection signal (S6). Pattern generation circuit 119 generates a data pattern having a reduced DC component (S7) and format circuit 118 adds header, pre-write, post-write and the like and formats user data (S8).

Selector circuit 120 in response to timing signal SS from timing provision circuit 115 selects the data pattern and the user data (S9) and records the data pattern in a format area and the formatted user data in a user data area (S10). Thus the recording operation is completed (S11). The Fig. 15 flow chart is also used when a data pattern is recorded in a defect frame.

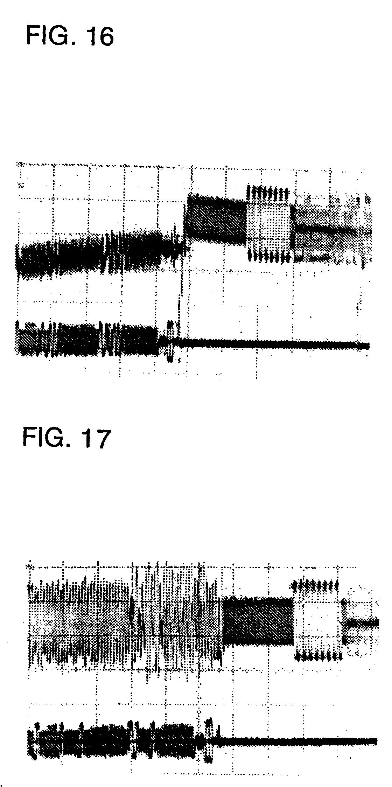

Reference will now be made to Figs. 16 and 17 to describe an effect achieved when a data pattern is recorded in a preformatted area. If an address area does not have a data pattern recorded therein, address information is detected without a DC component superimposed thereon, as shown in Fig. 16 at the lower half, whereas a reproduced RF signal has a DC component superimposed thereon and thus distorts, as shown in Fig. 16 at the upper half.

In contrast, if an address area or an FCM area has a data pattern "11110000" recorded therein, neither address information nor a reproduced RF signal have a DC component superimposed thereon, as shown in Fig. 17 at lower and upper halves, respectively.

Thus, recording a data pattern in a preformatted area, such as an address area, an FCM area and the like allows data to be reproduced accurately.

In accordance with the present invention, a data recording method is not limited to the Fig. 15 method and it may be any data recording method that includes the step of generating a data pattern with a DC component reduced, the step of formatting data to be recorded in a user data area, and the step of recording a data pattern in a preformatted area and recording formatted user data in a user data area.

Furthermore in the present invention a data recording method may be any method of recording in a preformatted area and a user data area data capable of reproducing data in a single reproduction system, as more widely defined.

In the above description, a magneto optical recording medium is referred to describe a data recording device and method capable of reducing a DC component when data is reproduced from a user data area. The present invention, however, is not limited thereto and may be any data recording device and method of recording, on a disk recording medium including a preformatted area and a user data area in the preformatted area, data that can be reproduced in the same reproduction system as applied to the user data area.

Although the present invention has been described and illustrated in detail, it is clearly understood that the same is by way of illustration and example only and is not to be taken by way of limitation, the spirit and scope of the present invention being limited only by the terms of the appended claims.

**Claims**

1.  A data recording device (200) recording data on a disk recording medium (100) having a user data area (20) and a preformatted area (10, 30) alternately arranged, comprising:

    a pattern generation circuit (119) generating a data pattern for reducing a direct-current component; and
    recording means (123, 124) employing a same system as applied to said user data area (20), to record in said preformatted area (10, 30) said data pattern generated by said pattern generation circuit (119).

2. The data recording device of claim 1, wherein said preformatted area (10, 30) includes an address area having address information recorded therein by means of at least one wobbled wall of a groove (1) formed in a surface of said recording medium, said address information specifying a location on said recording medium.

3. The data recording device of claim 1, wherein said preformatted area (10, 30) includes a phase information area having phase information previously recorded therein for generating a clock used to record or reproduce data in said user data area (20).

4. The data recording device of claim 1, wherein:

    said disk recording medium (100) includes a defective area corresponding to a user data area (20) not suitable for recording user data due to damage to said recording medium; and
    said data pattern from said pattern generation circuit (119) is recorded in a defective area sandwiched between two user data areas.

5. A data recording device (200) recording data on a disk recording medium (100) having a user data area (20) allowing data to be reproduced in a first reproduction system and a preformatted area (10, 30) allowing data to be reproduced in a second reproduction system different than said first reproduction system, comprising:

    a pattern generation circuit (119) generating a data pattern for reducing a direct-current component; and
    recording means (123, 124) recording in said preformatted area (10, 30) said data pattern from said pattern generation circuit (119) as data reproduced in said first reproduction system.

6. A data recording device (200) recording data on a disk recording medium (100) having a user data area (20) allowing data to be reproduced in a first reproduction system and a preformatted area (10, 30) allowing data to be reproduced in a second reproduction system different than said first reproduction system, comprising:

    a pattern generation circuit (119) generating a data pattern for reducing a direct-current component;
    a format circuit (118) formatting data to be recorded in said user data area;
    a selector circuit (120) selecting an output from said pattern generation circuit (119) at a timing of recording data in said preformatted area (10, 30), and selecting an output from said format at a timing of recording data in said user data area (20); and
    a magnetic head drive circuit (123) responding to an output from said selector circuit (120) by driving a magnetic head (125).

7. A data recording device (200) recording data on a disk recording medium (100) having a user data area (20) allowing data to be reproduced in a first reproduction system and a preformatted area (10, 30) allowing data to be reproduced in a second reproduction system different than said first reproduction system, comprising:

    a pattern generation circuit (119) generating a data pattern for reducing a direct-current component;
    a format circuit (118) formatting data to be recorded in said user data area;
    a timing provision circuit (115) generating a timing signal (SS) including a first timing signal generated to record data in said preformatted area (10, 30) and a second timing signal generated to record data in said user data area (20);
    a selector circuit (120) responding to said first timing signal by selecting an output from said pattern generation circuit (119), and responding to said second timing signal by selecting an output from said format circuit (118); and
    a magnetic head drive circuit (123) synchronized with said timing signal (SS) and responding to an output from said selector circuit (120) to drive a magnetic head (125).

8. The data recording device of claim 1, wherein said pattern generation circuit (119) outputs said data pattern having a logic level alternately varying for each predetermined data bit.

9. A data recording method of recording data in a disk recording medium (110) having a user data area (20) allowing data to be reproduced in a first reproduction system and a preformatted area (10, 30) allowing data to be reproduced in a second reproduction system different than said first reproduction system, comprising:

a first step of generating data pattern for reducing a direct-current component;
a second step of formatting data to be recorded in said user data area (20); and
a third step of recording in said preformatted area (10, 30) said data pattern as data reproduced in said first reproduction system, and recording in said user data area (20) the formatted data as data reproduced in said first reproduction system.

**10.** A data recording method of recording data in a disk recording medium (110) having a user data area (20) allowing data to be reproduced in a first reproduction system and a preformatted area (10, 30) allowing data to be reproduced in a second reproduction system different than said first reproduction system, comprising:

a first step of detecting said preformatted area (10, 30) on said disk recording medium (100) and generating a signal indicating that said preformatted area (10, 30) has been detected;
a second step of responding to said signal indicating that said preformatted area (10, 30) has been detected, by generating a timing signal (SS) including a first timing signal used in recording data in said preformatted area (10, 30) and a second timing signal used in recording data in said user data area (20);
a third step of generating data pattern for reducing a direct-current component;
a fourth step of formatting data to be recorded in said user data area (20); and
a fifth step of responding to the first timing signal by selecting said data pattern generated and responding to said second timing signal by selecting the formatted data, and recording said data pattern in said preformatted area (10, 30) and recording the formatted data in said user data area (20).

FIG. 1

# FIG. 2

| Frame | Segment 0 | Segment 1 | ····· | Segment n | ····· | Segment 38 |

**Segment 0**

| FCM | Address |
| 12DCB | 520DCB |

**Segment 1**

| FCM | Pre-Write | Header | Data | Post-Write |
| 12DCB | 4DCB | 320DCB | 190DCB | 4DCB |

User Data 0

**Segment n**
**(2≦n≦38)**

| FCM | Pre-Write | Data | Post-Write |
| 12DCB | 4DCB | 512DCB | 4DCB |

User Data n-1

Pre-Write  : Pre Write Patterm(0011)
Post-Write: Post Write Patterm(1100)

EP 1 081 706 A2

FIG. 3

200

100
101
102 OPTICAL PICKUP
125
123 MAGNETIC HEAD DRIVE CIRCUIT
124 LASER DRIVE CIRCUIT
103 FCM DETECTION CIRCUIT
104 PLL CIRCUIT
105 ADDRESS DETECTION CIRCUIT
106 BPF
107 AD
108 WAVEFORM EQUALIZATION
109 VITERBI DECODE
110 UNFORMAT CIRCUIT
111 DATA DE-MODULATION
112 BCH DECODER
113 HEADER DETECTION CIRCUIT
114 CONTROLLER
115 TIMING PROVISION CIRCUIT
116 BCH ENCODER — DATA TO BE RECORDED
117 DATA MODULATION CIRCUIT
118 FORMAT CIRCUIT
119 PATTERN GENERATION CIRCUIT
120
121
122
REPRODUCED DATA

# FIG. 4

EP 1 081 706 A2

# FIG. 5

FIG. 6

FIG. 7

# FIG. 8

EP 1 081 706 A2

# FIG. 9

FIG. 10

EP 1 081 706 A2

FIG. 11

CK

FCMT

S1

S2

MTC

TIME

# FIG. 12

**FIG. 13**

EP 1 081 706 A2

# FIG. 14

EP 1 081 706 A2

## FIG. 15

```
                    ( START )──S1
                         │
                         ▼
        ( TURN ON FOCUS SERVO AND )──S2
        (     TRACKING SERVO      )
                         │
                         ▼
        ( DETECT FINE CLOCK MARK )──S3
                         │
                         ▼
           ( DETECT ADDRESS )──S4
                         │
                         ▼
          (  GENERATE ADDRESS  )──S5
          (  DETECTION SIGNAL  )
                         │
                         ▼
        ( GENERATE TIMING SIGNAL )──S6
                         │
                         ▼
      ( GENERATE DATA PATTERN WITH )──S7
      (   DC-COMPONENT REDUCED     )
                         │
                         ▼
         ( FORMAT USER DATA )──S8
                         │
                         ▼
    ( SELECT DATA PATTERN AND USER DATA )──S9
    (    IN RESPONSE TO TIMING SIGNAL   )
                         │
                         ▼
  ( RECORD DATA PATTERN IN PREFORMATTED  )──S10
  ( AREA AND USER DATA IN USER DATA AREA )
                         │
                         ▼
              ( END )──S11
```

FIG. 16

FIG. 17